# FASCICULE DE BREVET EUROPEEN

(11) **EP 0 428 192 B1**
(45) Date de publication et mention de la délivrance du brevet: **22.03.1995**
(21) Numéro de dépôt: 90202003.1
(22) Date de dépôt: 23.07.1990
(51) Int. Cl.: F16H 39/18

(54) **Variateur hydrostatique de vitesse à pistons radiaux**
Stufenloses hydrostatisches Radialkolbengetriebe
Radial pistons hydrostatic transmission

(30) Priorité: 28.09.1989 IT 8565389
(43) Date de publication de la demande: 22.05.1991
(73) Titulaire: VAR-SPE S.p.A., I-36077 Tavernelle di Altavilla (Vicenza) (IT)
(72) Inventeur: Speggiorin, Giuseppe, Tavernelle di Altavila, Vicenza (IT)
(74) Mandataire: Bettello, Luigi, Dott. Ing.

(56) Documents cités:
- GB-A- 756 399
- GB-A- 1 190 114

## Description

La présente invention a pour objet un variateur hydrodynamique de vitesse qui est perfectionné par rapport aux variateurs du même type qu'on trouve à l'heure actuelle dans le commerce, plus particulièrement par rapport à celui qui a été décrit dans le brevet GB-A 1 190 114 au nom de la Société VAR-SPE di Speggiorin & C. s.a.s.

Le dispositif décrit dans le brevet générique sus-mentionné comprend une pompe à pistons radiaux et un moteur hydraulique, également à pistons radiaux ; entre ces deux éléments, reliés l'un à l'autre par l'arbre mené, est stabilisée une circulation de liquide traversant des canaux pratiqués dans l'arbre central. L'excentricité variable de la pompe et/ou du moteur hydraulique permet d'obtenir les variations de vitesse de l'arbre mené.

Le variateur ci-dessus rappelé, bien qu'ayant reçu un succès considérable sur le plan de son utilisation pratique, en particulier dans le domaine des petites et moyennes puissances, a révélé certains inconvénients qui sont éliminés moyennant adoption du variateur suivant la présente invention.

L'un des inconvénients qu'on a entendu éliminer est plus particulièrement celui d'une usure excessive des têtes des petits pistons radiaux de la pompe et du moteur hydraulique, cette usure, spécialement ressentie aux vitesses élevées, nécessitant un remplacement fréquent des segments de glissement des pistons précités, ce qui implique des pertes de temps et des frais pour le démontage et le remontage subséquent du variateur au sein des ensembles mécaniques où celui-ci est inséré.

Un autre inconvénient du variateur décrit dans le brevet sus-mentionné réside dans le prix de fabrication notable du groupe central comprenant la pompe dite d'engorgement, prix qui a des incidences considérables sur celui de l'ensemble.

En outre, il y a lieu de citer un caractère relativement bruyant du variateur, notamment aux vitesses élevées de rotation en relation aux fortes puissances transmises.

Sur ce même type de variateur on a pu parfois relever, à la suite d'un échauffement excessif, le blocage des paliers associés à l'arbre du distributeur.

Tous ces inconvénients sont éliminés dans le variateur perfectionné suivant l'invention, qui notamment se présente de manière plus silencieuse et économique que le précédent en comportant au surplus une usure bien inférieure, notamment au niveau de la course de coulissement entre les pistons radiaux et les segments d'étanchéité.

Plus spécialement, la présence des distributeurs frontaux autoéquilibrés sur la tête des rotors, ces distributeurs étant fixes par rapport au bâti de la machine, constitue un perfectionnement indiscutable au niveau du caractère fonctionnel et économique du variateur suivant l'invention.

Le variateur hydrodynamique de vitesse à piston radiaux suivant l'invention est défini à la revendicaiton 1.

Le dessin annexé, donné à titre d'exemple, permettra de mieux comprendre l'invention, les caractéristiques qu'elle présente et les avantages qu'elle est susceptible de procurer :
Fig. 1 est une coupe longitudinale axiale du dispositif.
Fig 2 à 6 sont des coupes transversales suivant les plans indiqués en II-II, III-III, IV-IV, V-V et VI-VI en fig. 1.

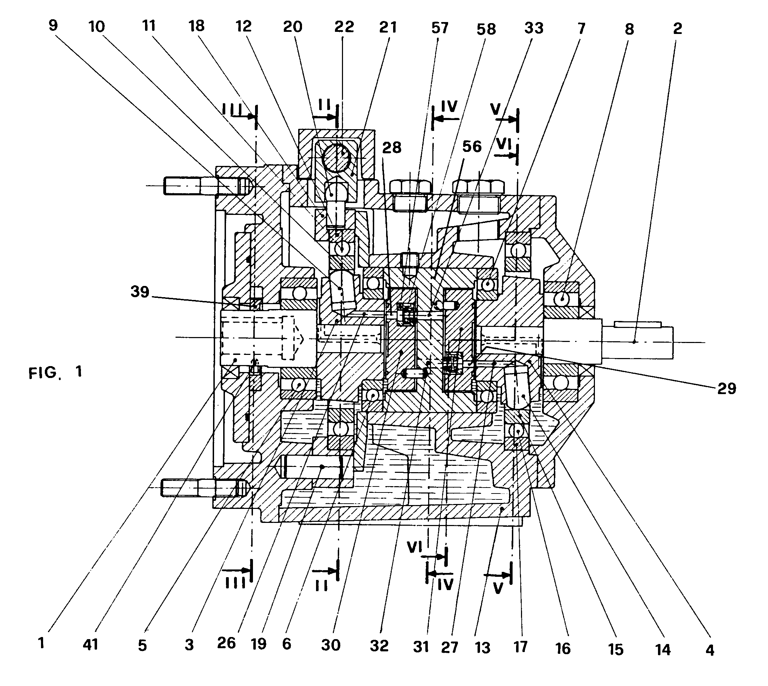

Comme montré en fig. 1, l'arbre menant 1 est relié et rendu solidaire de l'arbre mené 2 par une transmission hydraudynamique. L'arbre menant 1 est solidaire du rotor de la pompe 3 tandis que l'arbre mené 2 est rendu solidaire du rotor du moteur hydraulique 4. L'arbre menant 1 et le rotor de la pompe 3 sont supportés et peuvent tourner à l'intérieur de coussinets 5 et 6, tandis que l'arbre mené 2 et le rotor du moteur hydraulique 4 sont eux-mêmes supportés à rotation dans des coussinets 7 et 8.

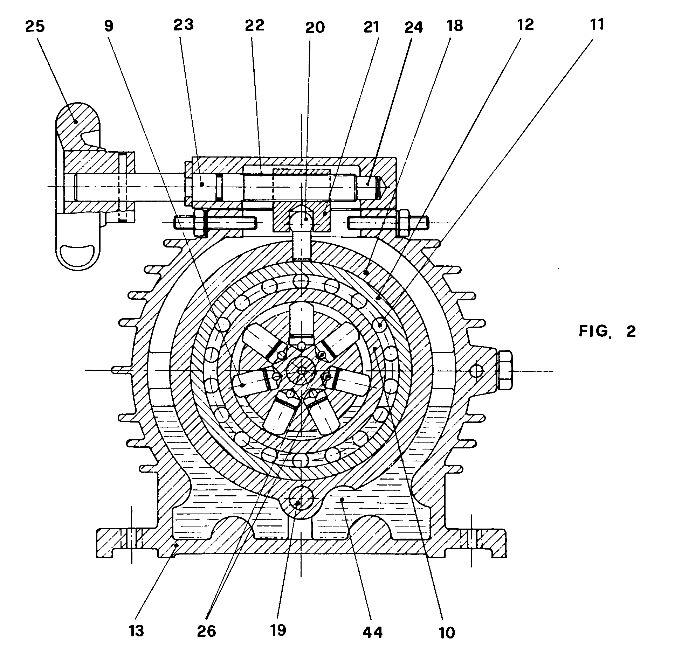

Le rotor de la pompe 3 comprend des cavités cylindriques radiales dans lesquelles se déplacent des pistons 9 qui en étant repoussés vers l'extérieur par la pression du liquide, se heurtent à la bague intérieure 10 d'un coussinet de roulement 11 dont la bague extérieure 12 est solidaire du bâti 13 tout en étant susceptible d'être déplacée transversalement à celui-ci, comme on peut mieux le voir en fig. 2.

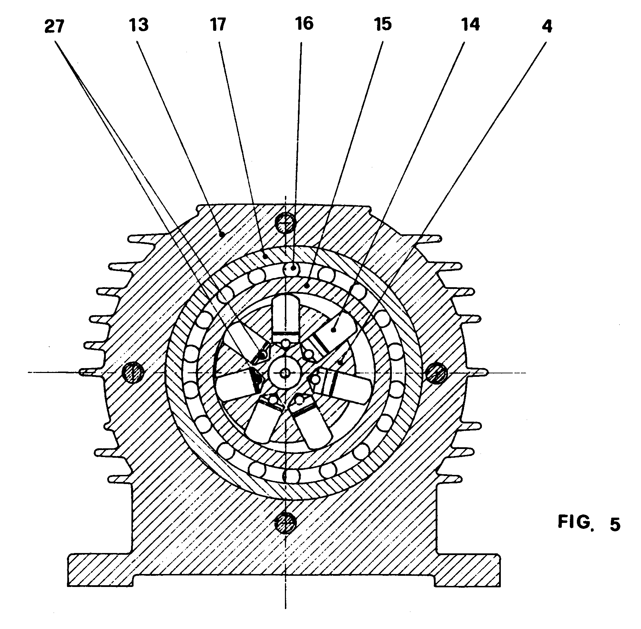

De manière similaire, le rotor du moteur hydraulique 4 (fig. 5) présente des cavités cylindriques radiales à l'intérieur desquelles coulissent les pistons 14 qui en étant repoussés vers l'extérieur par la pression du liquide viennent porter contre la bague intérieure 15 du coussinet de roulement 16 dont la bague extérieure 17 est solidaire du bâti 13.

Les pistons 9 comme les pistons 14 peuvent être disposés suivant des orientations obliques par rapport aux plans perpendiculaires à l'axe de la machine afin de satisfaire des conditions particulières de roulement.

L'un au moins des deux coussinets de roulement 11 et 16 peut avoir une excentricité variable.

Par exemple, dans la forme de réalisation illustrée en fig. 2, la bague extérieure 12 du coussinet 11 est fixée à l'anneau de manoeuvre 18 articulé sur le pivot-support 19, en pouvant se déplacer transversalement à l'axe longitudinal de la machine, par le moyen du système d'actionnement constitué par le pivot à tête sphérique 20 retenu par le manchon 21 dans l'ouverture filetée duquel est montée la vis 22 ; les parties cylindriques 23 et 24 de celle-ci sont susceptibles de tourner à l'intérieur des ouvertures ménagées sur le corps du bâti 13 en pouvant être mises en rotation par un petit volant 25 actionné à la main.

Une variation de l'excentricité du coussinet 11 implique une variation correspondante de la course maximale effectuée par les pistons 9 à l'intérieur des cavités cylindriques correspondantes et, en conséquence, une variation de la cylindrée de chaque piston.

Dans l'exemple de réalisation illustré sur les dessins, le moteur hydraulique 4 présente une excentricité constante tandis que la pompe rotative 3 présente une excentricité variable aussi bien dans un sens que dans l'autre.

On comprend toutefois que le moteur hydraulique 4 peut lui aussi être réalisé à excentricité variable, moyennant une disposition semblable à celle de la pompe 3.

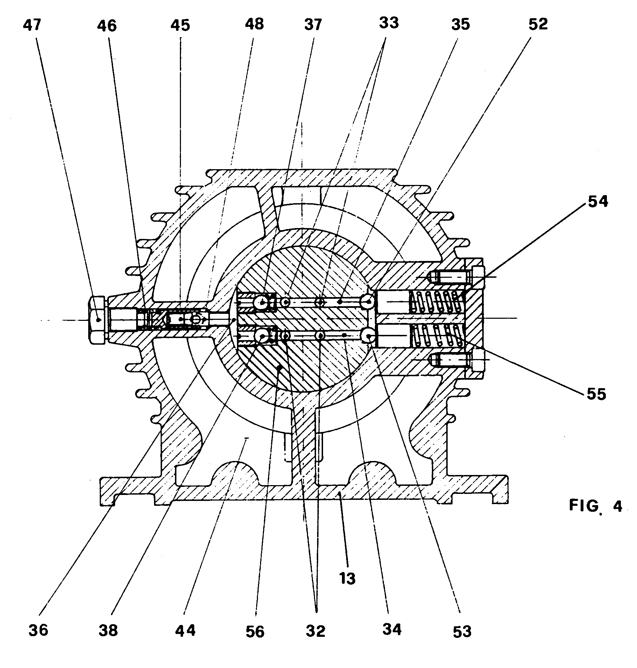

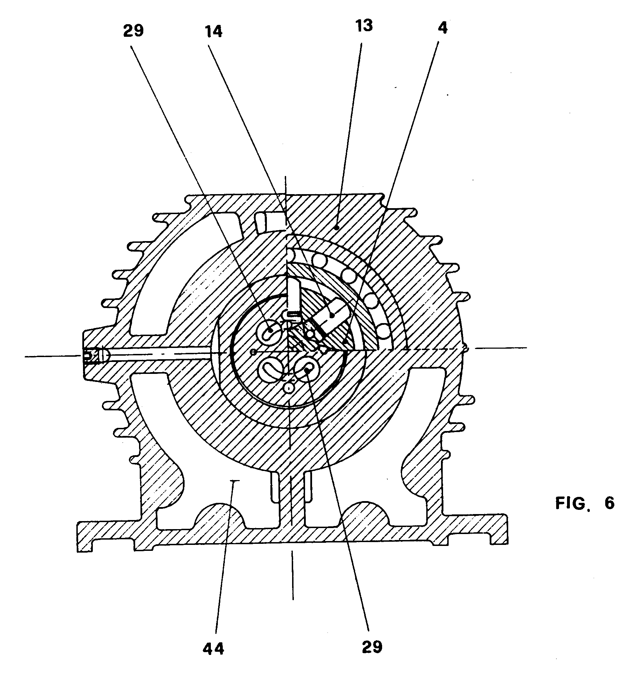

Chacune des cavités cylindriques radiales de la pompe 3 ou du moteur hydraulique 4 est prévue au niveau des trous axiaux 26 (fig. 2), respectivement 27 (fig. 5), de manière à pouvoir être mise en communication avec les lumières 28 et 29 (fig. 1), particulièrement bien visibles en fig. 6, des distributeurs frontaux 30 et 31 (fig. 1), lesquels sont euxmêmes mis en communication, par les ouvertures des conduits 32 et 33 (fig. 4), avec les cavités cylindriques radiales correspondantes du moteur hydraulique 4 (fig. 1).

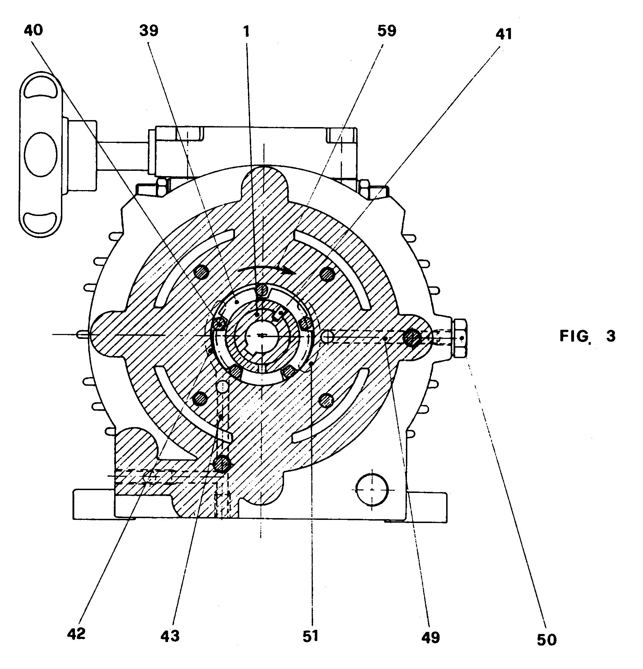

Les conduits longitudinaux 32 et 33 sont reliés, respectivement par des conduits transversaux 34 et 35 (fig. 4), à une chambre 36 qui est mise en communication, respectivement par des clapets 37 et 38, avec la chambre de refoulement d'une pompe d'engorgement 39 (fig. 3). Ces clapets 37 et 38, normalement maintenus fermés par des ressorts, agissent alternativement sur la pompe 3 suivant que le moteur hydraulique 4 tourne dans un sens ou dans l'autre, ceci en correspondance avec une excentricité identique ou inverse par rapport à celle de la pompe 3.

En fait l'engorgement du circuit par la pompe 39 (fig. 3) intervient toujours au niveau des conduits qui ramènent le liquide du moteur hydraulique 4 à la pompe 3, cette dernière étant constituée par un rotor muni de cavités radiales dans lesquelles se déplacent des galets 40, ledit rotor étant relié par une clavette 41 à l'arbre menant 1.

La chambre d'aspiration 42 (fig. 3) de la pompe d'engorgement 39 est reliée, à travers un conduit d'aspiration 43, à une chambre 44 (fig. 4) disposée à la base du bâti 13, cette chambre faisant fonction de réservoir pour le liquide.

Un clapet 45 (fig. 4), maintenu fermé par un ressort 46 associé à une vis 47, permet le refoulement, à travers un conduit 48 jusque dans un réservoir 44, du débit en excès de la pompe d'engorgement 39 (fig. 3).

Une canalisation 49, fermée par un robinet à vis 50, communique avec une chambre de refoulement 51 de la pompe d'engorgement 39, et permet ainsi le montage éventuel d'un manomètre pour la mesure de la pression du liquide à l'intérieur de cette chambre 51, en autorisant en outre le prélèvement éventuel du liquide sous pression en vue de l'alimentation, par exemple, des servo-mécanismes de commande et de réglage du variateur.

Des clapets 52 et 53 (fig. 4) déterminent la pression maximale du liquide dans le circuit précité. Ces clapets sont en effet maintenus fermés par des ressorts tarés 54 et 55 en autorisant le refoulement du liquide dans la chambre 44 prévue au-dessous du corps cylindrique 56 lorsqu'à la suite, par exemple, d'un arrêt imprévu du moteur hydraulique, la pression dudit liquide risque d'atteindre des valeurs excessives.

Suivant une forme de réalisation particulière du variateur suivant l'invention, on prévoit la possibilité que l'étanchéité entre les distributeurs frontaux 30 et 31 et les conduits 32 et 33 ménagés dans le corps central fixe du dispositif soit assurée par de petits pistons à segments d'étanchéité 57 associés à des ressorts 58 (fig. 1).

Le fonctionnement du variateur se comprend aisément moyennant examen des dessins auxquels la description qui précède se réfère.

En effet, dès que l'arbre moteur 1 est mis en rotation, il transmet le mouvement à la pompe d'engorgement 39 qui, à travers les clapets 37 et 38, assure la mise en pression du circuit hydraulique du dispositif en aspirant le liquide dans le réservoir inférieur 44.

Après quelques tours, le liquide sous pression emplit complètement les chambres cylindriques fermées des petits pistons 9 de la pompe 3 et des petits pistons 14 du moteur hydraulique 4. Ce dernier commence à tourner, dans le sens contraire de celui de la pompe 3 dans le cas où son excentricité coïncide avec celle de ladite pompe 3.

Suivant le sens de rotation indiqué par la flèche 59 de fig. 3, les petits pistons 9 du demi-cercle supérieur se déplacent vers l'extérieur soit sous l'action de la force centrifuge, soit sous celle du liquide qui pénètre dans lesdits cylindres correspondants à travers les ouvertures 26, jusqu'à l'intérieur du conduit 32, en assurant de la sorte son admission dans le moteur hydraulique où le phénomène se reproduit de manière exactement contraire.

En faisant varier l'excentricité de la pompe, on modifie le débit du liquide dans celle-ci, en engendrant de la sorte une variation du nombre de tours du moteur hydraulique.

Plus précisément, une augmentation de l'excentricité de la pompe 3 entraîne un plus fort débit de liquide hydraulique et en conséquence une augmentation du nombre de tours du moteur hydraulique. A l'inverse, une diminution de l'excentricité de la pompe provoquera de manière correspondante une diminution du nombre de tours de moteur.

Lorsque l'excentricité de la pompe est annulée, le moteur hydraulique s'arrête tandis que lorsque cette même excentricité affecte le côté opposé, les sens de rotation du moteur et de l'arbre mené sont inversées.

Effectivement les pistons 9 du demi-cercle inférieur sont repoussés vers l'extérieur par le liquide qui provient des ouvertures 26 et du conduit 32, tandis que les pistons du demi-cercle supérieur envoient, à travers lesdites ouvertures 26, ce liquide au conduit 33 et au moteur hydraulique 4.

Suivant une autre forme particulière de réalisation de l'invention, on prévoit que l'excentricité du moteur hydraulique peut elle-même être prévue variable, afin d'obtenir de la sorte un nombre de tours de l'arbre mené supérieur à celui de l'arbre menant, sans aucune autre limitation, et ce aussi bien dans un sens que dans l'autre.

Le dispositif suivant l'invention fonctionne substantiellement à puissance constante, en négligeant bien entendu les pertes par friction ou par laminage de l'huile, à l'intérieur des limites déterminées par le dimensionnement de la machine, et ce jusqu'aux valeurs de pression imposées par le tarage des clapets 52 et 53 de fig. 4.

Ces clapets de sécurité 52 et 53 s'opposent à ce qu'en cas d'arrêt intempestif de l'arbre mené, la pression du liquide puisse atteindre des valeurs dangereuses.

Il va de soi que le variateur pourra affecter des formes de réalisation différentes de celle qui vient d'être décrite. Par exemple la pompe peut être séparée du moteur hydraulique en étant reliée à celui-ci par des canalisations. Par ailleurs, on peut prévoir que la sortie de l'arbre mené soit orienté perpendiculairement à l'arbre menant.

Les avantages obtenus à l'aide du variateur perfectionné suivant l'invention sont évidents ; ils sont essentiellement dûs à l'élimination des raccordements mécaniques (par exemple du type Oldham) sur l'arbre menant et sur l'arbre mené, à la position de la pompe d'engorgement placée en tête de la machine et donc accessible pour les opérations de maintien et de remplacement, à la disposition particulière des galets à déplacement radial qui sont soumis à la force centrifuge, ainsi qu'à l'appui de ces galets sur des sièges trapézoïdaux, appui qui facilite l'adhérence de chaque galet contre la génératrice externe.

Les distributeurs frontaux, réalisés sous forme de plaquettes et autoéquilibrés, augmentent l'adhérence en fonction de la pression, laquelle dépend du couple moteur et du coupe résistant.

Les pistons à segments 57 associés aux ressorts 58 opérent l'étanchéité entre les distributeurs frontaux 30 et 31 et les conduits 32 et 33.

Un avantage manifeste de la forme de réalisation de l'invention réside dans le fait que les ressorts tarés 54 et 55 permettent le refoulement du liquide dans la chambre 44 prévue au-dessous du corps cylindrique 56 lorsque la pression dudit liquide risque d'affecter des valeurs dangereuses.

## Revendications

1. Variateur hydrodynamique de vitesse à pistons radiaux, du genre comprenant une pompe (3) et un moteur hydraulique (4) tous deux disposés dans un bâti (13) et équipés de pistons tournants (9 et 14) qui, repoussés vers l'extérieur par la pression du liquide, butent contre les bagues internes (10 et 15) de coussinets de roulement (11 et 16) à excentricité variable, caractérisé
- en ce que des distributeurs frontaux (30 et 31) fixes par rapport au bâti (13), reliés par conduits (32 et 33) prévus à l'intérieur d'un corps cylindrique central (56) fixe par rapport au bâti (13), sont mis en communication, à travers des ouvertures orientées axialement (26 et 27), avec les cavités cylindriques radiales dans lesquelles se déplacent les pistons (9 et 14) de la pompe (3), respectivement du moteur hydraulique (4), en permettant au moteur hydraulique (4) de tourner dans le même sens ou dans le sens inverse par rapport à la pompe (3), en fonction d'une excentricité identique ou inverse par rapport à celle de ladite pompe (3);
- en ce qu'une pompe d'engorgement (39) est disposée sur une tête du bâti (13) qui correspond à la pompe (3), ladite pompe d'engorgement (39) est reliée par un conduit d'aspiration (43) à une chambre (44) disposée dans une base du bâti (13), laquelle chambre fait fonction de réservoir pour le liquide,
- et en ce que des moyens annulaires d'étanchéité, constitués par des petits pistons à segments (57) munis de ressorts (58), sont prévus dans les distributeurs frontaux (30 et 31), afin de permettre le passage du liquide de la pompe (3) vers le moteur hydraulique (4) à travers les conduits (32, 33).

2. Variateur suivant la revendication 1, caractérisé en ce qu'un anneau de manoeuvre (18) est prévu et articulé sur un pivot-support (19), l'anneau de manoeuvre (18) porte une bague extérieur (12) du coussinet (11), une bague intérieur (10) du coussinet (10) est en contact avec les pistons (9) de la pompe (3), l'anneau de manoeuvre (18) peut se déplacer transversalement par rapport à l'axe de rotation du variateur par un moyen de système d'actionnement constitué par un pivot à tête sphérique (20) retenu par un manchon (21) dans l'ouverture filetée duquel est montée une vis (22) actionnée à la main par un petit volant (25), ledit système d'actionnement cause une variation de l'excentricité dudit coussinet (11) et, en conséquence, une variation correspondante de la course maximale effectué par les pistons (9) et ainsi une variation de la cylindrée de chaque desdits pistons.

3. Variateur suivant l'une quelconque des revendications 1 à 2, caractérisé en ce que les pistons radiaux (9 et 14) de la pompe (3), respectivement du moteur hydraulique (4), sont disposés suivant des plans orientés de manière légèrement oblique par rapport aux plans perpendiculaires à l'axe de rotation du variateur.

4. Variateur suivant l'une quelconque des revendications 1 à 3, caractérisé en ce que dans le corps central fixe (56) sont logés des clapets (52 et 53) qui déterminent la pression maximale du liquide dans le circuit, ainsi que les clapets (37 et 38) normalement fermés par des ressorts et qui agissent alternativement suivant que le moteur hydraulique (4) tourne dans le même sens ou dans le sens opposé par rapport à la pompe, et ceci suivant que l'excentricité est identique ou inverse par rapport à celle de ladite pompe (3).

5. Variateur suivant l'une quelconque des revendications 2 à 4, caractérisé en ce que l'anneau de manoeuvre (18) pour le réglage de l'excentricité de la pompe (3), ainsi que celui qui équipe éventuellement le moteur hydraulique (4), articulé sur ledit pivot-support (19) peut être déplacé par ledit système d'actionnement, en vue de modifier l'excentricité de la pompe (3) et, éventuellement celle du moteur hydraulique (4), d'une position maximale dans un sens vers une autre position maximale dans le sens opposé, en permettant ainsi de modifier la vitesse de rotation du moteur hydraulique dans un sens comme dans le sens opposé par rapport à celui de la pompe, à l'intérieur de larges limites.

6. Variateur suivant l'une quelconque des revendications 1 à 5, caractérisé en ce que la pompe (3) est solidaire de l'arbre menant (1) et les ouvertures (26) communiquent avec des lumières (28 et 29) du distributeur frontal (30).

7. Variateur suivant l'une quelconque des revendications 1 à 6, caractérisé en ce que les ouvertures (27) du rotor du moteur hydraulique (4) communiquent avec des lumières (29) du distributeur frontal (31).

## Claims

1. Hydrodynamic flow converter with radial pistons, of the type comprising a pump (3) and a hydraulic motor (4), both of which are disposed in a housing (13) and equipped with rotary pistons (9 and 14) which, driven outwards by the pressure of the liquid, come up against the internal collars (10 and 15) of variable eccentricity rolling bearings (11 and 16), characterised by the following features:
- frontal distributors (30 and 31), fixed with respect to the housing (13) and connected by conduits (32 and 33) provided inside a central cylindrical body (56) fixed with respect to the housing (13), are linked via axially orientated openings (26 and 27) to the radial cylindrical cavities in which the pistons (9 and 14) respectively of the pump (3) and of the hydraulic motor (4) travel, enabling the hydraulic motor (4) to rotate in the same direction or in the reverse direction with respect to the pump (3), in response to an identical or inverse eccentricity with respect to that of said pump (3);
- a blocking-type pump (39) is disposed on one head of the housing (13) which corresponds to the pump (3), said blocking-type pump (39) is connected by a suction conduit (43) to a chamber (44) disposed in a base of the housing (13), said chamber acting as a tank for the liquid;
- and annular sealing means constituted by small pistons having rings (57) fitted with springs (58) are provided in the frontal distributors (30 and 31), so as to enable the liquid from the pump (3) to flow to the hydraulic motor (4) via the conduits (32, 33).

2. Flow converter according to claim 1, characterised in that a control ring (18) is fitted and articulated on a support pivot (19), the control ring (18) carries an external ring (12) of the bearing (11), an internal ring (10) of the bearing (10) is in contact with the pistons (9) of the pump (3), the control ring (18) is adapted to move transversely with respect to the rotational axis of the converter by an actuating system means constituted by a spherical head pivot (20) held in place by a sleeve (21) in the threaded opening of which is fitted a screw (22) operated by means of a small handwheel (25), said actuating system causes a variation in the eccentricity of said bearing (11) and, consequently, a corresponding variation in the maximum travel performed by the pistons (9) and accordingly a variation in the swept volume of each of said pistons.

3. Flow converter according to either of claims 1 to 2, characterised in that the radial pistons (9 and 14) respectively of the pump (4) and of the hydraulic motor (4) are arranged in accordance with planes orientated slightly obliquely with respect to the planes perpendicular to the rotational axis of the converter.

4. Flow converter according to any of claims 1 to 3, characterised in that housed in the fixed central body (56) are flaps (52 and 53) which determine the maximum pressure of the liquid in the circuit, as well as flaps (37 and 38) normally closed by springs and which operate alternately depending on whether the hydraulic motor (4) is rotating in the same direction or in the opposite direction with respect to the pump, namely according to whether the eccentricity is identical or inverse with respect to that of said pump (3).

5. Flow converter according to any of claims 2 to 4, characterised in that the control ring (18) for regulating the eccentricity of the pump (3), as well as the one fitted on the hydraulic motor (4) if appropriate, articulated on said support pivot (19), may be displaced by said actuating system for the purpose of modifying the eccentricity of the pump (3), and possibly that of the hydraulic motor (4), from a maximum position in one direction to another maximum position in the opposite direction, thereby enabling the speed of rotation of the hydraulic motor to be modified, within broad limits, in both one direction and the opposite direction with respect to that of the pump.

6. Flow converter according to any of claims 1 to 5, characterised in that the pump (3) is rigidly joined to the driving shaft (1) and the openings (26) communicate with ports (28 and 29) in the frontal distributor (30).

7. Flow converter according to any of claims 1 to 6, characterised in that the openings (27) in the rotor of the hydraulic motor (4) communicate with ports (29) in the frontal distributor (31).

## Patentansprüche

1. Stufenloses hydrostatisches Radialkolbengetriebe, enthaltend eine Pumpe (3) und einen Hydraulikmotor (4), die beide in einem Gehäuserahmen (13) angeordnet und mit rotierenden Kolben (9 und 14) ausgerüstet sind, die durch den Druck der Flüssigkeit nach außen auf die Innenringe (10 und 15) von Wälzlagern (11 und 16) mit variabler Exzentrizität gedrückt werden, dadurch gekennzeichnet,
- daß Frontverteiler (30 und 31), die in bezug auf das Rahmengestell (13) fest angeordnet und mit Kanälen (32 und 33) verbunden sind, die im Inneren eines zentralen Zylinderkörpers (56) vorgesehen sind, der in bezug auf den Gehäuserahmen (13) fest angeordnet ist, über Axialbohrungen 26 und 27 mit den radialen zylindrischen Ausnehmungen verbunden sind, in denen sich die Kolben (9 und 14) der Pumpe (3) bzw. des Hydraulikmotors (4) verschieben, indem sie dem Hydraulikmotor (4) gestatten, sich im gleichen Sinn oder im Gegensinn in bezug auf die Pumpe (3) zu drehen, unter der Wirkung einer Exzentrizität, die in bezug auf diejenige der Pumpe (3) identisch oder gegensinnig ist;
- daß eine Drosselpumpe (39) auf einem Kopf des Gehäuserahmens angeordnet ist, die der Pumpe (3) entspricht, wobei die Drosselpumpe (39) über einen Ansaugkanal (43) mit einer Kammer (44) verbunden ist, die auf einer Grundfläche des Gehäuserahmens (13) angeordnet ist, wobei die Kammer als Reservoir für die Flüssigkeit dient, und
- daß ringförmige Dichtungsmittel, die durch kleine mit Federn (58) versehene Segment-Kolben (57) gebildet werden, in den Frontverteilern (30 und 31) vorgesehen sind, um den Durchfluß der Flüssigkeit von der Pumpe (3) zum Hydraulikmotor (4) über die Kanäle (32, 33) zu gestatten.

2. Getriebe nach Anspruch 1, dadurch gekennzeichnet, daß ein Manövrierring (18) auf einem Drehzapfen (19) angeordnet ist, wobei der Manövrierring (18) einen Außenring (12) des Wälzlagers (11) trägt, daß ein Innenring (10) des Wälzlagers (11) mit den Kolben (9) der Pumpe (3) in Berührung steht, daß sich der Manövrierring (18) in bezug auf die Rotationsachse des Getriebes mittels eines Antriebssystems, das durch einen Kugelkopf-Zapfen (20) gebildet wird, der durch eine Muffe (21) festgehalten wird, in deren Gewindebohrung eine durch einen kleinen Handgriff (25) betätigbare Schraube (22) angeordnet ist, quer verschieben läßt, wobei das Antriebssystem eine Variation der Exzentrizität des Wälzlagers (11) verursacht und demzufolge eine Variation, die dem Maximal-Umlauf entspricht, der durch die Kolben (9) bewirkt wird, und auf diese Weise eine Variation des Hubraums jedes einzelnen Kolbens.

3. Getriebe nach einem der Ansprüche 1 bis 2, dadurch gekennzeichnet, daß die Radialkolben (9 und 14) der Pumpe (3) bzw. des Hydraulikmotors (4) gemäß den leicht schräg orientierten Ebenen in bezug auf die senkrechten Ebenen zur Rotationsachse des Getriebes verschoben werden.

4. Getriebe nach einem der Ansprüche 1 bis 3, dadurch gekennzeichnet, daß in dem feststehenden Zentralkörper (56) Rückschlagventile (52 und 53) angeordnet sind, die den Maximaldruck der im Kreislauf befindlichen Flüssigkeit bestimmen, sowie Rückschlagventile (37 und 38), die normalerweise durch Federn geschlossen sind und die alternativ wirken, je nach dem, ob sich der Hydraulikmotor (4) im gleichen Sinn dreht oder im Gegensinn in bezug auf die Pumpe, und dies je nach dem, ob die Exzentrizität identisch oder entgegengesetzt ist, bezogen auf diejenige der Pumpe (3).

5. Getriebe nach einem der Ansprüche 2 bis 4, dadurch gekennzeichnet, daß der Manövrierring (18) zur Regelung der Exzentrizität der Pumpe (3) sowie derjenige, der zufälligerweise den auf dem Drehzapfen (19) angeordneten Hydraulikmotor (4) betätigt, durch das Antriebssystem verschoben werden kann, um die Exzentrizität der Pumpe (3) und möglicherweise diejenige des Hydraulikmotors (4) aus einer Maximalposition in einem Sinn in eine andere Maximalposition im Umkehrsinn zu verändern, um auf diese Weise die Rotationsgeschwindigkeit des Hydraulikmotors in einem Sinn sowie im Umkehrsinn in bezug auf denjenigen der Pumpe, innerhalb weiter Grenzen zu verändern.

6. Getriebe nach einem der Ansprüche 1 bis 5, dadurch gekennzeichnet, daß die Pumpe (3) mit der Antriebswelle (1) solidarisch verbunden ist, und daß die Bohrungen (26) mit den Durchlaßöffnungen (28 und 29) des Frontverteilers (30) kommunizieren.

7. Getriebe nach einem der Ansprüche 1 bis 6, dadurch gekennzeichnet, daß die Bohrungen (27) des Rotors des Hydraulikmotors (4) mit Durchlaßöffnungen (29) des Frontverteilers (31) kommunizieren.
